# EUROPÄISCHE PATENTSCHRIFT

(11) **EP 2 741 948 B1**
(45) Veröffentlichungstag und Bekanntmachung des Hinweises auf die Patenterteilung: **12.10.2016**
(21) Anmeldenummer: 12750734.1
(22) Anmeldetag: 10.08.2012
(51) Int. Cl.: B61H 11/00

(54) **BREMSANLAGE MIT MAGNETSCHIENENBREMSEINRICHTUNG**
BRAKE SYSTEM HAVING AN ELECTROMAGNETIC TRACK BRAKE DEVICE
SYSTÈME DE FREINAGE COMPORTANT UN DISPOSITIF DE FREIN ÉLECTROMAGNÉTIQUE SUR RAIL

(30) Priorität: 12.08.2011 DE 102011110050
(43) Veröffentlichungstag der Anmeldung: 18.06.2014
(73) Patentinhaber: KNORR-BREMSE Systeme für Schienenfahrzeuge GmbH, 80809 München (DE)
(72) Erfinder: ELSTORPFF, Marc-Gregory, München 80638 (DE)
(86) Internationale Anmeldenummer: PCT/EP2012/065660
(87) Internationale Veröffentlichungsnummer: WO 2013/024014

(56) Entgegenhaltungen:
- EP-A1- 1 712 445
- DE-A1- 10 009 331
- DE-C- 845 962

## Beschreibung

Die vorliegende Erfindung betrifft eine Bremssteuereinrichtung für eine Bremsanlage eines Schienenfahrzeugs mit einer Magnetschienenbremseinrichtung, eine Bremsanlage mit einer derartigen Bremssteuereinrichtung, ein Schienenfahrzeug sowie ein Verfahren zum Steuern mindestens einer Magnetschienenbremseinrichtung einer Bremsanlage eines Schienenfahrzeugs.

Moderne Schienenfahrzeuge weisen häufig Bremsanlagen mit mehreren unterschiedlich wirkenden Bremseinrichtungen auf. In der Regel ist eine Betriebsbremseinrichtung wie eine druckbetätigte Bremseinrichtung, etwa eine hydraulische oder pneumatische Bremse vorgesehen. Daneben werden zusätzlich unter Anderem Wirbelstrombremsen, Retarder oder auch Magnetschienenbremsen eingesetzt. Im Gegensatz zur Wirbelstrombremse ist dabei die Magnetschienenbremseinrichtung eine Reibungsbremseinrichtung, welche bei Betätigung in reibenden Kontakt mit der Schiene gebracht wird. Durch eine Bestromung wird die Magnetschienenbremseinrichtung magnetisiert und haftet stark an der Schiene. Dabei unterliegt die Magnetschienenbremseinrichtung einem nicht unerheblichen Verschleiß. Insbesondere beim Durchführen einer Schnellbremsung oder einer Notbremsung werden Magnetschienenbremseinrichtungen zur Unterstützung der Bremswirkung der normalen Betriebsbremseinrichtung eingesetzt. Befindet sich die Magnetschienenbremseinrichtung in reibenden Kontakt mit der Schiene, kann sie während der Fahrt auch auf der Schiene befindliche Materialien wie Laub, Wasser, ..., usw. entfernen. Somit dient der Einsatz einer Magnetschienenbremseinrichtung auch zur Reinigung der Schiene, wodurch sich insbesondere der Kraftschluss zwischen Rad und Schiene verbessern kann, der im Allgemeinen als ein Kraftschlussbeiwert parametrisiert wird. Eine derartige Magnetschienenbremse wird beispielsweise in der Patentschrift DE 845 962 C1 offenbart.

Es ist eine Aufgabe der vorliegenden Erfindung, einen verbesserten Betrieb einer Magnetschienenbremseinrichtung während einer Schienenreinigung zu ermöglichen. Dabei soll der Verschleiß der Magnetschienenbremseinrichtung verringert werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Eine Bremsanlage kann mindestens eine Magnetschienenbremseinrichtung und eine Betriebsbremseinrichtung aufweisen. Eine Magnetschienenbremseinrichtung kann als Komponenten eine oder mehrere Elektromagneten umfassen, die in Kontakt mit einer Schiene bringbar sind und welche bestrombar sein können. Beim Bestromen können der oder die Elektromagneten der Magnetschienenbremseinrichtung durch einen magnetischen Effekt an der Schiene haften. Es ist vorstellbar, dass eine Magnetschienenbremseinrichtung mindestens eine mechanische und/oder pneumatische und/oder hydraulische Betätigungseinrichtung als Komponente aufweist. Eine solche Betätigungseinrichtung kann dazu geeignet sein, den oder die Elektromagneten und/oder Reibkomponenten der Magnetschienenbremseinrichtung von einer Ruhestellung in eine Bremsstellung und umgekehrt zu bewegen. Es kann vorgesehen sein, dass derartige Betätigungseinrichtungen pneumatisch, elektrisch oder hydraulisch ansteuerbar oder betätigbar sind, beispielsweise durch eine Bremssteuereinrichtung. Eine Reibkomponente der Magnetschienenbremseinrichtung kann dazu vorgesehen sein, bei einer Bremsung vermittels der Magnetschienenbremseinrichtung in Reibkontakt mit der Schiene zu stehen. Eine solche Reibkomponente kann ein Elektromagnet sein oder an einem Elektromagnet befestigt sein. Eine Betriebsbremseinrichtung kann eine kraftschlussabhängige Reibungsbremseinrichtung sein, die eine Bremskraft über einen Rad-Schiene-Kontakt zu übertragen vermag. Eine Magnetschienenbremseinrichtung ist keine kraftschlussabhängige Reibungsbremseinrichtung in diesem Sinne, da sie eine Bremskraft nicht über einen Rad-Schiene-Kontakt überträgt, sondern einen eigenen reibenden Kontakt zur Schiene herzustellen vermag. Eine Betriebsbremseinrichtung kann insbesondere eine druckbetätigte Bremseinrichtung sein, beispielsweise eine pneumatische oder hydraulische Bremseinrichtung. Bei einer derartigen Bremseinrichtung kann ein Bremsdruck erzeugt werden, über welchen Reibelemente von Reibbremseinrichtungen in reibenden Kontakt miteinander gebracht werden können, um Räder und das Fahrzeug abzubremsen. Eine Betriebsbremseinrichtung kann auch eine elektrisch betätigte Betriebsbremseinrichtung sein, etwa eine elektromechanische oder elektrische Betriebsbremseinrichtung. Bei einer derartigen Bremseinrichtung kann ein Bremsstrom erzeugt werden, über welchen Reibelemente von Reibbremseinrichtungen in reibenden Kontakt miteinander gebracht werden können, um Räder und das Fahrzeug abzubremsen. Typische Beispiele für derartige Betriebsbremsen sind Scheibenbremsen, Klotzbremsen oder kombinierte Scheiben- und Klotzbremsen. Bei einer druckbetätigten Betriebsbremseinrichtung wird ein Bremsdruck durch Ausüben einer Bremskraft auf reibende Elemente in Wärme umgesetzt. Analog wird bei einer elektrisch betätigten Betriebsbremseinrichtung ein Bremsstrom durch Ausüben einer Bremskraft auf reibende Elemente in Wärme umgesetzt. Bei einer Bremsung durch eine Betriebsbremseinrichtung werden ausgeübte Bremsmomente oder Bremskräfte über den Rad-Schiene-Kontakt aufgenommen. Das Maß an Bremsmoment beziehungsweise Bremskraft, das über diesen Rad-Schiene-Kontakt aufgenommen werden kann, wird durch einen Parameter begrenzt, der im Allgemeinen als Adhäsionsbeiwert oder Kraftschlussbeiwert bezeichnet wird. Dieser Wert hängt für ein einzelnes Rad von der Belastung des Rades durch ein auf ihm lastendes Gewicht und insbesondere von den Kontaktbedingungen zwischen Rad und Schiene ab. Insbesondere dann, wenn eine Zwischenschicht zwischen Rad und Schiene ausgebildet ist, wie etwa eine Wasser- oder Laubschicht, kann der Kraftschlussbeiwert sehr niedrig sein. Darüber hinaus hängt der Kraftschlussbeiwert stark von einem herrschenden Radschlupf ab. Der Radschlupf S ist dabei definiert als S=(V_{T}-V_{R})/V_{T}, wobei v_{T} die Translationsgeschwindigkeit des Schienenfahrzeugs bezeichnet und v_{R} die Umlaufgeschwindigkeit des betrachtenden Rades. Liegt der Radschlupf S eines Rades genau bei Null, kann über dieses Rad keine Brems- oder Beschleunigungskraft übertragen werden. Allgemein gilt, dass dann, wenn bei einem gegebenen herrschenden Kraftschlussbeiwert eine Bremskraft oder eine Beschleunigungskraft auf ein Rad ausgeübt wird, welche oberhalb der bei herrschendem Kraftschlussbeiwert übertragbaren Kraft liegt, das betreffende Rad ins Gleiten, Blockieren oder Durchdrehen getrieben werden kann. So ist insbesondere bei einer Bremsung in der Regel darauf zu achten, dass die gemäß dem herrschenden Kraftschlussbeiwert übertragbare Bremskraft nicht überschritten wird. Einer Betriebsbremseinrichtung kann eine Gleitschutzvorrichtung zugeordnet sein, welche dazu ausgebildet ist, ein Gleiten und/oder Blockieren der Räder zu erfassen und gegebenenfalls entgegenzuwirken. Dazu können beispielsweise bei pneumatischen Betriebsbremseinrichtungen Ablassventile vorgesehen sein, welche bei Auslösung der Gleitschutzeinrichtung an geeigneten Stellen den Bremsdruck vermindern, um die übertragene Bremskraft zu verringern. Eine Bremssteuereinrichtung kann dazu ausgebildet sein, eine Magnetschienenbremseinrichtung anzusteuern. Dabei kann die Bremssteuereinrichtung separat für die Magnetschienenbremseinrichtung vorgesehen sein. Eine Bremssteuereinrichtung kann auch zum Ansteuern anderer Bremseinrichtungen der Bremsanlage ausgebildet sein, wie beispielsweise der Betriebsbremseinrichtung. Die Bremssteuereinrichtung kann eine elektronische Steuereinrichtung wie ein Bremsrechner sein. Es ist vorstellbar, dass eine Bremssteuereinrichtung zum Ansteuern der Magnetschienenbremseinrichtung mehrere separate Steuereinheiten umfasst, die unterschiedlichen Elektromagneten und/oder Betätigungseinrichtungen der Magnetschienenbremseinrichtung zugeordnet sein können. Das Ansteuern der Magnetschienenbremseinrichtung kann insbesondere das elektrische und/oder hydraulische und/oder pneumatische und/oder elektrohydraulische und/oder elektropneumatische Ansteuern von Betätigungseinrichtungen der Magnetschienenbremseinrichtung umfassen. Dabei können durch Ansteuern der Betätigungseinrichtungen ein oder mehrere Elektromagnete zwischen einer Ruhestellung und einer Bremsstellung bewegt werden. Bei Bestromung des Elektromagneten kann ein Reibkontakt zwischen der Magnetschienenbremseinrichtung und der Schiene erfolgen. Dabei können Reibkomponenten durch Elektromagneten aus der Bremsstellung in Kontakt mit der Schiene gebracht werden. Es ist auch vorstellbar, dass in der Bremsstellung bereits ein Kontakt zwischen Magnetschienenbremseinrichtung und/oder einer Reibkomponente und der Schiene besteht, der durch das Bestromen verstärkt wird. Zweckmäßigerweise erfolgt ein Bestromen dann, wenn sich der mindestens eine anzusteuernde Elektromagnet in einer Bremsstellung befindet. Bei einigen Fahrzeugen kann auch vorgesehen sein, dass die Magnetschienenbremseinrichtung oder ihre Elektromagnete bereits in der Ruhestellung ausreichend nahe an der Schiene befinden, dass bei einem Bestromen ein Reibkontakt zwischen der Magnetschienenbremseinrichtung, insbesondere einer Reibkomponente, und der Schiene erfolgt. In einem solchen Fall kann auf eine Betätigungseinrichtung verzichtet werden, und die Ruhestellung und die Bremsstellung können identisch sein. Insbesondere kann das Ansteuern der Magnetschienenbremseinrichtung das Bestromen und/oder gezielte Versorgen mit Strom und/oder das Unterbrechen einer Stromversorgung eines oder mehrerer Elektromagneten der Magnetschienenbremseinrichtung umfassen. Allgemein kann ein Aktivieren und/oder Betätigen einer Magnetschienenbremseinrichtung das Ansteuern von Komponenten der Magnetschienenbremseinrichtung derart umfassen, dass ein Reibkontakt zwischen Schiene und Magnetschienenbremseinrichtung erfolgt, etwa durch Ansteuern mindestens einer Betätigungseinrichtung, um die Magnetschienenbremseinrichtung in eine Bremsstellung zu bringen, und/oder das Ansteuern zum Bestromen eines oder mehrerer Elektromagneten. Ein Deaktivieren und/oder Lösen einer Magnetschienenbremseinrichtung kann das Ansteuern von Komponenten der Magnetschienenbremseinrichtung derart umfassen, dass ein Reibkontakt unterbrochen wird. Dabei kann eine Stromversorgung eines oder mehrerer Elektromagneten unterbrochen werden und/oder eine Betätigungseinrichtung mindestens eine Komponente der Magnetschienenbremseinrichtung von einer Bremsstellung in eine Ruhestellung bewegen. Es ist vorstellbar, dass eine Magnetschienenbremseinrichtung mehrere separat voneinander ansteuerbare Reibkomponenten und/oder Betätigungseinrichtungen und/oder Elektromagneten aufweist. Somit kann eine Magnetschienenbremseinrichtung teilweise gelöst und teilweise betätigt sein. Ein Ansteuern kann nach Maßgabe vorgegebener Bremsparameter erfolgen, die beispielsweise durch eine zentrale Steuereinrichtung bereitgestellt werden können. Eine Bremssteuereinrichtung kann dazu ausgebildet sein, eine Magnetschienenbremseinrichtung basierend auf oder in Abhängigkeit von bestimmten Parametern anzusteuern. Dazu kann die Bremssteuereinrichtung dazu ausgebildet sein, einem Parameter entsprechende Zustandsdaten zu empfangen. Derartige Zustandsdaten können beispielsweise durch eine Sensoreinrichtung bereitgestellt werden, mit welcher die Bremssteuereinrichtung verbunden oder verbindbar ist. Es ist auch vorstellbar, dass die Bremssteuereinrichtung zur Datenübertragung mit mindestens einer weiteren Steuereinrichtung verbunden ist, um von dieser entsprechende Zustandsdaten zu empfangen. Alternativ oder zusätzlich kann die Bremssteuereinrichtung dazu ausgebildet sein, basierend auf von einer Sensoreinrichtung und/oder einer Steuereinrichtung empfangenen Sensordaten dem fraglichen Parameter entsprechende Zustandsdaten zu ermitteln oder zu berechnen. Somit können entsprechende Zustandsdaten auf Sensordaten basieren oder Sensordaten sein, welche von geeigneten Sensoreinrichtungen bereitgestellt werden. Beispielsweise kann eine Bremsanlage mit einer Sensoreinrichtung verbunden oder verbindbar sein und/oder eine Sensoreinrichtung kann der Bremsanlage zugeordnet sein. Eine Sensoreinrichtung kann dabei beispielsweise Raddrehzahlsensoren und/oder Geschwindigkeitssensoren und/oder Bremswirkungssensoren, etwa Bremskraftsensoren und/oder Bremsmomentsensoren, und/oder Verzögerungssensoren und/oder Beschleunigungssensoren umfassen. Es ist auch vorstellbar, dass eine Steuereinrichtung der Bremsanlage, insbesondere die Bremssteuereinrichtung zum Ansteuern der Magnetschienenbremseinrichtung, mit der Sensoreinrichtung und/oder anderen Steuereinrichtungen zur Datenübertragung verbunden ist, um beispielsweise Sensordaten und/oder Zustandsdaten und/oder Betriebsparameter zu empfangen.

Die vorliegende Erfindung betrifft eine Bremssteuereinrichtung für eine Bremsanlage eines Schienenfahrzeugs, wobei die Bremsanlage mindestens eine Magnetschienenbremseinrichtung aufweist, welche zur Erzeugung einer Bremskraft nach Maßgabe der Bremssteuereinrichtung mit variabler Stromstärke bestrombar ist. Die Bremssteuereinrichtung ist dazu ausgebildet, die mindestens Magnetschienenbremseinrichtung während einer Fahrt zum Reinigen einer Schiene mit einer Reinigungsstromstärke zu betätigen. Somit kann über die Bremssteuereinrichtung ein Reinigen der Schiene durch die Magnetschienenbremseinrichtung angesteuert werden. Dadurch verbessert sich der Kraftschluss zwischen Schiene und den der Magnetschienenbremseeinrichtung beziehungsweise ihrer Reibkomponente nachfolgenden Rädern. Die Bremssteuereinrichtung kann dazu ausgebildet sein, eine in Fahrtrichtung oder Zugrichtung des Schienenfahrzeugs vorderste Magnetschienenbremseinrichtung zum Reinigen der Schiene zu betätigen. Das Bestromen der Magnetschienenbremseinrichtung kann insbesondere das Versorgen mit Strom oder Bestromen eines oder mehrerer Elektromagneten der Magnetschienenbremseinrichtung umfassen oder beschreiben. Allgemein kann das Bestromen oder Ansteuern der Magnetschienenbremseinrichtung nach Maßgabe der Bremssteuereinrichtung als Teil des Ansteuerns der Magnetschienenbremseinrichtung durch die Bremssteuereinrichtung angesehen werden. Es ist vorstellbar, dass die Magnetschienenbremseinrichtung und/oder mindestens ein Elektromagnet der Magnetschienenbremseinrichtung zur Versorgung mit elektrischem Strom mit einer Quelle elektrischer Energie verbunden oder verbindbar ist. Die Versorgung mit elektrischer Energie, durch Bereitstellen eines Stromes mit einer bestimmten Stromstärke, kann nach Maßgabe der Bremssteuereinrichtung erfolgen. Dazu kann die Bremssteuereinrichtung auf geeignete Art mit der Magnetschienenbremseinrichtung und/oder der Quelle elektrischer Energie verbunden oder verbindbar sein. Eine Betriebsbremseinrichtung kann Teil der Bremsanlage sein. Allgemein kann die Bremsanlage mindestens eine weitere Bremseinrichtung aufweisen, die keine Magnetschienenbremseinrichtung ist. Es ist vorstellbar, dass die Bremssteuereinrichtung dazu ausgebildet ist, die Magnetschienenbremseinrichtung separat und/oder unabhängig von einer Betriebsbremseinrichtung und/oder weiteren Bremseinrichtungen anzusteuern. Es kann vorgesehen sein, dass die Bremssteuereinrichtung dazu ausgebildet ist, bei der Ansteuerung der Magnetschienenbremseinrichtung Zustandsdaten zu berücksichtigen, welche insbesondere eine andere Bremseinrichtung betreffen können, beispielsweise eine Betriebsbremseinrichtung. Allgemein kann die Magnetschienenbremseinrichtung in Fahrtrichtung oder Zugrichtung vor mindestens einem durch eine weitere Bremseinrichtung zu bremsenden Rad angeordnet sein, insbesondere vor einem durch eine Betriebsbremseinrichtung zu bremsenden Rad. Wird die Magnetschienenbremseinrichtung für eine Bremsung oder zum Reinigen der Schiene angesteuert, so wird sie in reibenden Kontakt mit der Schiene gebracht. Es ist zweckmäßig, wenn ein reibender Kontakt der Magnetschienenbremseinrichtung mit einer Reibfläche der Schiene erfolgt, welche nachfolgend auch in reibenden Kontakt mit mindestens einer Radfläche des Fahrzeugs gerät. Die Profile der Magnetschienenbremseinrichtung und/oder der Räder können entsprechend ausgebildet sein. Durch den Kontakt der Magnetschienenbremseinrichtung mit der Reibfläche der Schiene wird diese von Zwischenschichten befreit und gereinigt. Die Bremssteuereinrichtung kann dazu ausgebildet sein, einen Schienenzustand während eines Bremsvorgangs zu überwachen und die Magnetschienenbremseinrichtung basierend auf einer Änderung dem Schienenzustand entsprechender Schienenzustandsdaten anzusteuern. Die Bremssteuereinrichtung kann dazu ausgebildet sein, die Magnetschienenbremseinrichtung basierend auf Geschwindigkeitsdaten anzusteuern. Die Geschwindigkeitsdaten können insbesondere eine Fahrzeuggeschwindigkeit betreffen. Die Geschwindigkeitsdaten können Zustandsdaten sein, welche durch eine geeignete Sensoreinrichtung ermittelt werden, beispielsweise durch Geschwindigkeitssensoren und/oder basierend auf Daten von Raddrehzahlsensoren. Die Geschwindigkeitsdaten können von einer zur Datenübertragung mit der Bremssteuereinrichtung verbundenen weiteren Steuereinrichtung übertragbar sein. Somit kann die aktuelle Geschwindigkeit auch bei der Reinigung der Schiene berücksichtigt werden. Alternativ oder zusätzlich kann die Bremssteuereinrichtung dazu ausgebildet sein, die Magnetschienenbremseinrichtung basierend auf Zustandsdaten anzusteuern, welche eine durch eine Betriebsbremseinrichtung ausgeübte Bremskraft und/oder ein entsprechendes Bremsmoment beschreiben. Derartige Zustandsdaten können auf Sensordaten basieren, welche durch mindestens einen Bremswirkungssensor wie einen Bremskraftsensor und/oder einen Bremsmomentensensor ermittelt und bereitgestellt werden. Entsprechende Sensoren können der Bremsanlage zur Überwachung der Betriebsbremseinrichtung zugeordnet sein. Die Bremssteuereinrichtung kann insbesondere dazu ausgebildet sein, beim Betätigen oder Ansteuern der Magnetschienenbremseinrichtung für eine Reinigung der Schiene Schienenzustandsdaten zu berücksichtigen. Das Betätigen der Magnetschienenbremseinrichtungen zum Reinigen einer Schiene kann durch eine entsprechende Fahreranweisung oder eine automatische Anweisung beispielsweise durch einen Schienenzustandssensor erfolgen. Schienenzustandsdaten können das Vorhandensein von Feuchtigkeit oder Nässe auf der Schiene, das Vorhandensein von Flüssigkeiten und/oder festen Materialien wie Laub, Wasser, Sand, Staub, Öl und/oder Schnee oder Eis auf der Schiene betreffen. Beispielsweise kann vorgesehen sein, dass die Bremssteuereinrichtung zum Empfangen von Feuchtigkeits- oder Nässedaten oder anderen Schienenzustandsdaten mit einer entsprechenden Sensoreinrichtung oder einer Steuereinrichtung verbunden oder verbindbar ist. Dabei kann es zweckmäßig sein, wenn die Bremssteuereinrichtung dazu ausgebildet ist, basierend auf einem Nässesignal oder anderen Schienenzustandssignal die Magnetschienenbremseinrichtung zum Reinigen der Schiene mit der Reinigungsstromstärke zu betätigen. Das entsprechende Signal kann dabei beispielsweise das Vorliegen einer Feuchtigkeit oder Nässe auf der Schiene angeben oder einen anderen Schienenzustand betreffen. Ein entsprechender Sensor kann beispielsweise ein optischer Sensor sein, welcher in einem vorderen Bereich des Schienenfahrzeugs angeordnet sein kann. Es ist vorstellbar, dass die Magnetschienenbremseinrichtung über eine Betätigungseinrichtung verfügt, welche eine Reibkomponente der Magnetschienenbremseinrichtung in physischen Kontakt mit einer Schiene oder einer auf der Schiene angeordnete Zwischenschicht zu bringen vermag, auch ohne dass ein entsprechender Elektromagnet der Magnetschienenbremseinrichtung bestromt wird. In einem solchen Fall kann die Reinigungsstromstärke auch Null betragen, so dass die Reibkomponente der Magnetschienenbremseinrichtung nur durch die Betätigungseinrichtung in einen Kontakt zum Reinigen der Schiene gebracht wird. Es kann vorgesehen sein, dass die Bremssteuereinrichtung dazu ausgelegt ist, einen Steuerparameter zu überwachen, der beispielsweise einen Radschlupf, einen Kraftschlussbeiwert, eine Bremswirkung wie eine Bremskraft und/oder ein Bremsmoment betreffen kann. Dazu kann die Bremssteuereinrichtung zum Empfangen entsprechender Zustandsdaten ausgebildet sein, welche entsprechend beispielsweise einen Radschlupf, einen Kraftschlussbeiwert, eine Bremswirkung wie eine Bremskraft und/oder ein Bremsmoment betreffen. Insbesondere kann die Bremssteuereinrichtung dazu ausgebildet sein, den zeitlichen Verlauf eines derartigen Steuerparameters zu speichern und/oder zu überwachen.

Die Reinigungsstromstärke kann geringer sein als eine Bremsstromstärke, mit welcher die Magnetschienenbremseinrichtung während einer Bremsung bestromt wird. Somit erfordert die Schienenreinigung eine geringere Energie als eine Bremsung und belastet die Reibkomponente der Magnetschienenbremseinrichtung weniger. Eine Bremsung kann dabei dadurch definiert sein, dass ein Bremsanforderungssignal vorliegt, welches beispielsweise durch einen Zugführer bereitgestellt werden kann. Eine Bremsung kann auch dadurch definiert sein, dass eine weitere Bremseinrichtung der Bremsanlage als die Magnetschienenbremseinrichtung betätigt ist. Eine solche weitere Bremseinrichtung kann sich insbesondere von einer Magnetschienenbremseinrichtung unterscheiden. Beispielsweise kann eine Bremsung vorliegen, wenn und/oder während eine Betriebsbremseinrichtung wie eine hydraulische oder pneumatische oder elektrische Bremsvorrichtung betätigt ist. Dabei ist zu bemerken, dass das Betätigen der Magnetschienenbremseinrichtung mit der Reinigungsstromstärke nicht dazu dienen soll, das Fahrzeug abzubremsen. Vielmehr kann das Reinigen der Schiene während einer normalen Fahrt durchgeführt werden, die beispielsweise angetrieben sein kann. Somit ist es zweckmäßig, eine geringe Reinigungsstromstärke zu verwenden, um die Fahrt nicht unnötig und unerwünscht zu behindern. Es kann vorgesehen sein, dass die Bremssteuereinrichtung dazu ausgebildet ist, während einer Reinigung der Schiene mit einer Magnetschienenbremseinrichtung die Stromstärke auf eine Bremsstromstärke zu erhöhen, wenn sie ein entsprechendes Bremssignal empfängt. Somit kann durch einfaches Erhöhen der Stromstärke von einem Reinigungsvorgang zu einem gezielten Bremsvorgang übergegangen werden, der selbstverständlich ebenfalls zum Reinigen der Schiene beiträgt.

Die Bremssteuereinrichtung kann mit einer Raddrehzahlsensoreinrichtung verbunden oder verbindbar sein. Über eine derartige Raddrehzahlsensoreinrichtung lassen sich Radschlupfdaten erfassen. Es ist insbesondere vorstellbar, dass die Radschlupfdaten den Radschlupf mindestens eines Rades oder einer Radachse betreffen, die in Fahrtrichtung hinter der Magnetschienenbremseinrichtung oder einer entsprechenden Reibkomponente angeordnet sind, ohne dass zwischen Magnetschienenbremseinrichtung oder einer entsprechenden Reibkomponente und dem betreffenden Rad oder Rädern weitere Räder liegen. Somit liegen Magnetschienenbremseinrichtungen oder die Reibkomponente und die Räder örtlich nahe beieinander und die Radschlupfdaten können als repräsentativ für den Schienenzustand nahe bei der Magnetschienenbremseinrichtung oder die Reibkomponente dienen. Alternativ oder zusätzlich können die Radschlupfdaten auch mindestens ein Rad betreffen, welches in Fahrtrichtung vor der Magnetschienenbremseinrichtung oder einer entsprechenden Reibkomponente angeordnet ist.

Bei einer Weiterbildung kann die Bremssteuereinrichtung dazu ausgebildet sein, die Reinigungsstromstärke in Abhängigkeit von mindestens einem Radschlupf zu variieren. Dabei kann der Radschlupf durch die Bremssteuereinrichtung von einer Raddrehzahlsensoreinrichtung und/oder einer weiteren Steuereinrichtung empfangen werden. Der Radschlupf steht in einem engen Zusammenhang mit einem Kraftschlussbeiwert und spielt daher für eine Bremsung oder auch Beschleunigung des Fahrzeugs eine erhebliche Rolle. Insbesondere kann vorgesehen sein, dass die Bremssteuereinrichtung dazu ausgebildet ist, durch Variieren der Reinigungsstromstärke einen Radschlupf in einen für einen bestimmten Betrieb des Schienenfahrzeugs gewünschten Bereich einzustellen. Der Radschlupf kann sich auf mindestens ein Rad beziehen, das in Fahrtrichtung vor oder hinter der Reibkomponente der Magnetschienenbremseinrichtung angeordnet sein kann. Es kann vorgesehen sein, dass eine Reibkomponente der Magnetschienenbremseinrichtung zwischen zwei Rädern angeordnet ist, die auf der gleichen Schiene laufen. Dabei können insbesondere die beiden Räder und die Reibkomponente der Magnetschienenbremseinrichtung auf einem gemeinsamen Drehgestell angeordnet sein. Es ist vorstellbar, dass die Bremssteuereinrichtung dazu ausgebildet ist, den Radschlupf der beiden die Reibkomponente der Magnetschienenbremseinrichtung umgebenden Räder zu überwachen und miteinander zu vergleichen. Die Bremssteuereinrichtung kann dazu ausgebildet sein, basierend auf dem Vergleich dieser Radschlupfe die Magnetschienenbremseinrichtung anzusteuern und/oder die Reinigungsstromstärke zu variieren. Dabei können insbesondere jeweils auf die entsprechenden Räder ausgeübte Kräfte wie Antriebskräfte oder Bremskräfte oder zugehörige Bremsdrücke berücksichtigt werden. Liegen bei vergleichbaren ausgeübten Kräften und/oder Bremsdrücken bei einer zum Reinigen betätigten Magnetschienenbremseinrichtung im Wesentlichen vergleichbare Radschlupfe vor, kann zum Beispiel erkannt werden, dass die Magnetschienenbremseinrichtung die Schiene nicht derart reinigt, dass sich ein Unterschied im Kraftschlussbeiwert oder Radschlupf der betrachteten Räder ergibt. Dann kann durch die Bremssteuereinrichtung beispielsweise die Stromstärke erhöht werden. Dann, wenn eine bestimmte maximale für die Reinigung vorgesehene Stromstärke erreicht ist, kann durch die Bremssteuereinrichtung die Reinigung abgebrochen werden, um die Magnetschienenbremseinrichtung nicht unnötig zu belasten. Dazu kann die Magnetschienenbremseinrichtung durch die Bremssteuereinrichtung deaktiviert und/oder in eine Ruhestellung gebracht werden.

Die Bremssteuereinrichtung kann mit einer Bremswirkungssensoreinrichtung verbunden oder verbindbar sein. Die Bremswirkungssensoreinrichtung kann insbesondere Bremskraftsensoren und/oder Bremsmomentsensoren aufweisen. Dies ermöglicht das Bereitstellen von entsprechenden Bremswirkungsdaten für die Bremssteuereinrichtung.

Die Bremssteuereinrichtung kann dazu ausgebildet sein, die Reinigungsstromstärke in Abhängigkeit von mindestens einem Kraftschlussbeiwert zu variieren. Somit kann die Reinigungsstromstärke derart angesteuert werden, dass sich ein gewünschter Kraftschlussbeiwert ergibt. Es ist vorstellbar, dass die Bremssteuereinrichtung dazu ausgebildet ist, die Magnetschienenbremseinrichtung kraftschlussabhängig anzusteuern. Der Kraftschlussbeiwert kann basierend auf Daten von Raddrehzahlsensoren und/oder Radschlupfdaten und/oder Bremswirkungsdaten wie Bremskraftdaten und/oder Bremsmomentdaten und/oder Fahrzeuggeschwindigkeitsdaten und/oder Bremsdruckdaten und/oder Bremsstromdaten, bestimmt und/oder berechnet werden. Der Kraftschlussbeiwert kann durch die Bremssteuereinrichtung für ein oder mehrere Räder erfasst oder bestimmt werden. Es kann vorgesehen sein, dass die Bremssteuereinrichtung dazu ausgebildet ist, einen Kraftschlussbeiwert für mindestens ein Rad während einer Betätigung einer Magnetschienenbremseinrichtung zu überwachen. Wird durch Einsatz der Magnetschienenbremseinrichtung der Reibkontakt zwischen dem mindestens einem Rad und der Schiene so verbessert, dass der Kraftschlussbeiwert einen bestimmten Schwellenwert überschreitet, kann die Bremssteuereinrichtung die Magnetschienenbremseinrichtung deaktivieren oder ihre Bestromung verringern. Es können mehrere Schwellenwerte definiert sein, bei deren Überschreiten jeweils eine unterschiedliche Bestromung vorgesehen sein kann. Der Kraftschlussbeiwert kann für ein oder mehrere Räder bestimmt werden, die vor und/oder hinter mindestens einer Reibkomponente der Magnetschienenbremseinrichtung angeordnet sein können. Die Bremssteuereinrichtung kann dazu ausgebildet sein, einen Kraftschlussbeiwert in Fahrtrichtung oder Zugrichtung vor mindestens einer Reibkomponente der Magnetschienenbremseinrichtung und hinter der mindestens einen Reibkomponente zu bestimmen. Die Bremssteuereinrichtung kann dazu ausgebildet sein, basierend auf einem Vergleich der Kraftschlussbeiwerte vor und hinter der mindestens einen Reibkomponente die Reinigungsstromstärke zu variieren. Beispielsweise kann die Bremssteuereinrichtung dazu ausgebildet sein, die Reinigungsströmstärke zu erhöhen, um einen gewünschten Kraftschlussbeiwert oder eine Erhöhung des Kraftschlussbeiwertes zu erreichen, wenn der Vergleich nur eine geringfügige oder keine Erhöhung des Kraftschlussbeiwertes ergibt. Wird bei Erreichen einer bestimmten maximalen Reinigungsstromstärke keine oder keine vorbestimmte ausreichende Erhöhung des Kraftschlussbeiwertes hinter der Reibkomponente erreicht, kann die Bremssteuereinrichtung das Reinigen abbrechen. Dazu kann die Magnetschienenbremseinrichtung durch die Bremssteuereinrichtung deaktiviert und/oder in eine Ruhestellung gebracht werden. Diese Variante ist analog zur oben beschriebenen Ansteuerung basierend auf einem Vergleich von Radschlupfdaten und kann alternativ oder zusätzlich dazu vorgesehen sein.

Bei einer Weiterbildung kann die Bremssteuereinrichtung dazu ausgebildet sein, die Reinigungsstromstärke in Abhängigkeit von einer zeitlichen Änderung eines Radschlupfes und/oder eines Kraftschlussbeiwertes zu variieren. Somit kann insbesondere auf eine Veränderung des Schienenzustands über längere Strecken reagiert werden, da sich eine derartige Änderung auf den zeitlichen Verlauf für den Radschlupf und/oder Kraftschlussbeiwert niederschlägt. Auch kann eine zeitliche Änderung des Radschlupfes und/oder des Kraftschlussbeiwertes bei den oben beschriebenen Steuerungen berücksichtigt werden.

Die vorliegende Erfindung betrifft außerdem eine Bremsanlage für ein Schienenfahrzeug mit mindestens einer Magnetschienenbremseinrichtung und einer hierein beschriebenen Bremssteuereinrichtung. Die Bremssteuereinrichtung kann zur Ansteuerung der Magnetschienenbremseinrichtung ausgebildet sein. Es ist vorstellbar, dass die Bremsanlage eine hierin beschriebene Bremsanlage ist. Die Bremsanlage kann mindestens eine weitere Bremseinrichtung umfassen, welche insbesondere eine Betriebsbremseinrichtung sein kann. Die Betriebsbremseinrichtung kann eine elektrisch betätigte oder eine druckbetätigte Betriebsbremseinrichtung sein, insbesondere eine pneumatische oder hydraulische Betriebsbremseinrichtung. Die Betriebsbremseinrichtung sowie gegebenenfalls weitere Bremseinrichtungen, wie etwa eine lineare Wirbelstrombremseinrichtung, können durch eine elektronische Steuereinrichtung ansteuerbar sein. Die Steuereinrichtung kann die Bremssteuereinrichtung sein. Es ist vorstellbar, dass die Bremssteuereinrichtung die Steuereinrichtungen für die weiteren Bremseinrichtungen umfasst. Den Bremseinrichtungen der Bremsanlage können geeignete Sensoren einer Sensoreinrichtung zugeordnet sein. Die Sensoreinrichtung kann Komponente der Bremsanlage sein. Sensoren können beispielsweise Raddrehzahlsensoren und/oder Bremswirkungssensoren, wie etwa Bremskraftsensoren und/oder Bremsmomentsensoren, und/oder Geschwindigkeitssensoren und/oder Bremsdrucksensoren und/oder Bremsstromsensoren sein.

Außerdem betrifft die Erfindung ein Schienenfahrzeug mit einer hierin beschriebenen Bremsanlage und/oder einer hierin beschriebenen Bremssteuereinrichtung.

Die Erfindung betrifft außerdem ein Verfahren zum Reinigen einer Schiene mit einer Magnetschienenbremseinrichtung eines Schienenfahrzeugs, wobei die Magnetschienenbremseinrichtung zur Erzeugung einer Bremskraft nach Maßgabe einer Bremssteuereinrichtung mit variabler Stromstärke bestrombar ist. Bei dem Verfahren wird die Magnetschienenbremseinrichtung durch die Bremssteuereinrichtung mit einer Reinigungsstromstärke betätigt. Die Bremssteuereinrichtung kann eine hierin beschriebene Bremssteuereinrichtung sein. Es ist vorstellbar, dass die Magnetschienenbremseinrichtung Teil einer hierin beschriebenen Bremsanlage ist. Die Reinigungsstromstärke kann geringer sein als eine Bremsstromstärke, mit welcher die Magnetschienenbremseinrichtung während einer Bremsung bestromt wird. Die Bremssteuereinrichtung kann mit einer Raddrehzahlsensoreinrichtung verbunden werden. Es ist vorstellbar, dass die Reinigungsstromstärke durch die Bremssteuereinrichtung in Abhängigkeit von mindestens einem Radschlupf variiert wird. Die Bremssteuereinrichtung kann mit einer Bremswirkungssensoreinrichtung verbunden oder verbindbar sein. Es kann vorgesehen sein, dass die Reinigungsstromstärke durch die Bremssteuereinrichtung in Abhängigkeit von mindestens einem Kraftschlussbeiwert variiert wird. Alternativ oder zusätzlich kann die Reinigungsstromstärke durch die Bremssteuereinrichtung in Abhängigkeit von einer zeitlichen Änderung eines Radschlupfes und/oder eines Kraftschlussbeiwertes variiert werden.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer Bremsanlage eines Schienenfahrzeugs mit einer Bremssteuereinrichtung und
- Figur 2: schematisches Flussdiagramm eines Verfahrens zum Ansteuern mindestens einer Magnetschienenbremseinrichtung.

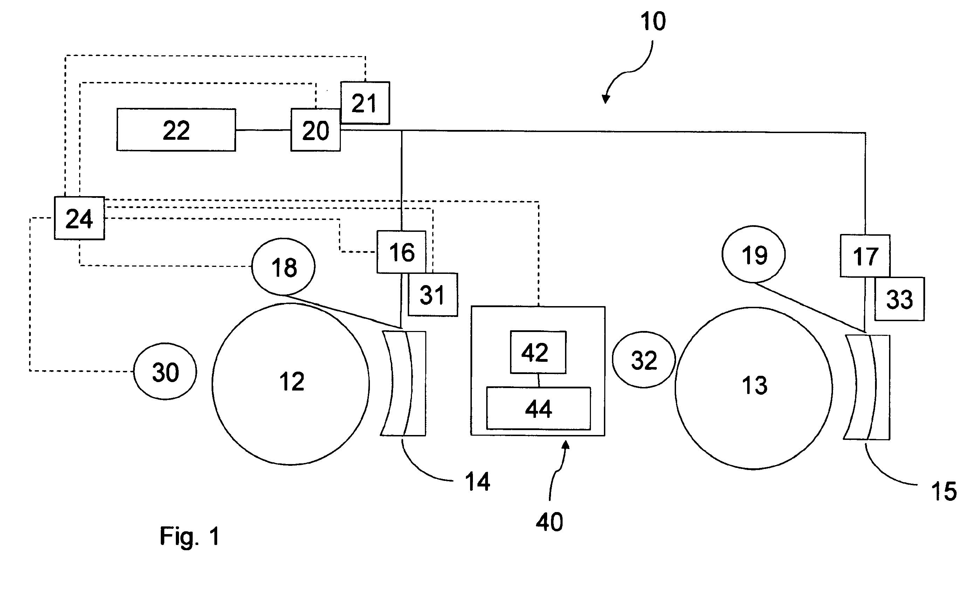

Figur 1 zeigt schematisch eine Bremsanlage 10 eines Schienenfahrzeugs mit einer pneumatischen Betriebsbremseinrichtung. Mechanische und pneumatische Verbindungen und Leitungen sind mit durchgezogenen Linien dargestellt, während elektrische Verbindungen oder Kommunikationskanäle gestrichelt dargestellt sind. Die Bremsanlage 10 ist dazu vorgesehen, Räder 12 und 13 des Schienenfahrzeugs zu bremsen. In diesem Beispiel befinden sich die Räder 12 und 13 auf unterschiedlichen Radachsen, aber einem Drehgestell. Dem ersten Rad 12 ist ein erster Bremsklotz 14 zugeordnet. Dem zweiten Rad 13 ist ein zweiter Bremsklotz 15 zugeordnet. Jeder der Bremsklötze 14, 15 weist einen Bremsbelag auf, der dann, wenn der Bremsklotz mit dem Bremsbelag an die Lauffläche des zugeordneten Rades 12, 13 gedrückt wird, das zugeordnete Rad abbremst. Der Bremsklotz 14 ist durch einen Krafterzeuger 16 zum Bremsen betätigbar. Der Krafterzeuger 16 ist über eine Versorgungsleitung mit einer Hauptsteuerventileinrichtung 20 verbunden. Über die Hauptsteuerventileinrichtung 20 kann dem Krafterzeuger 16 Druckluft zugeführt werden. Ähnlich ist dem Bremsklotz 15 ein Krafterzeuger 17 zugeordnet, der ebenfalls über die Hauptsteuerventileinrichtung 20 mit Druckluft zur Betätigung des Krafterzeugers versorgt werden kann, um den Bremsklotz 15 mit der Radlauffläche des Rades 13 in Kontakt zu bringen. Die Hauptsteuerventileinrichtung 20 ist mit einer Druckluftvorratseinrichtung 22 verbunden, aus der sie Druckluft entnehmen kann, um sie bei einer Bremsung den Krafterzeugern 16, 17 bereitzustellen. Ferner ist eine als Bremsrechner ausgebildete elektronische Bremssteuereinrichtung 24 vorgesehen, welche es vermag, die Hauptsteuerventileinrichtung 20 anzusteuern. Dazu kann die Hauptsteuerventileinrichtung 20 insbesondere eine oder mehrere Magnetventile aufweisen, die durch die Bremssteuereinrichtung 24 ansteuerbar sind. Die Bremssteuereinrichtung 24 vermag es Bremsdaten zu empfangen, beispielsweise von einem Zugrechner. Bremsdaten können beispielsweise eine Bremsanforderung, Fahrzeuggeschwindigkeit und/oder eine gewünschte Verzögerung betreffen. Aus Gründen der Übersicht sind die elektrischen Steuerleitungen für die dem zweiten Rad zugeordneten Komponenten nicht dargestellt. Sie sind allerdings mit den dem ersten Rad und seinen Komponenten zugeordneten Steuerleitungen vergleichbar. Dem ersten Rad 12 ist ferner ein Bremswirkungssensor 18 zugeordnet, der es vermag, eine bei einer Bremsung auf den Bremsklotz 14 ausgeübte Bremskraft und/oder ein Bremsmoment zu ermitteln. Der Bremswirkungssensor 18 kann somit als Bremskraftsensor angesehen werden. Ein derartiger Bremswirkungssensor kann beispielsweise einen oder mehrere Dehnungsmessstreifen aufweisen. Der Sensor 18 ist zur Übertragung von Daten an die elektronische Bremssteuereinrichtung 24 angeschlossen. Ferner ist dem Rad 12 ein erster Raddrehzahlsensor 30 zugeordnet, welcher die Drehzahl des Rades 12 zu erfassen vermag. Auch dieser Sensor ist zur Datenübertragung mit der elektronischen Steuereinrichtung 24 verbunden. Analog ist dem zweiten Rad ein zweiter Bremswirkungssensor 19 zugeordnet, welcher eine auf den Bremsklotz 15 ausgeübte Bremskraft und/oder ein Bremsmoment zu ermitteln vermag. Darüber hinaus ist dem zweiten Rad 13 auch ein zweiter Raddrehzahlsensor 32 zugeordnet. Die Sensoren 18, 19 können jeweils als Teil einer Bremswirkungssensoreinrichtung angesehen werden. Die Raddrehzahlsensoren 30, 32 können jeweils als Teil einer Raddrehzahlsensoreinrichtung angesehen werden. Die Krafterzeuger 16, 17 können jeweils pneumatische Zylinder umfassen, die bei Beaufschlagung mit einem Bremsdruck eine Bremskraft auf den zugeordneten Bremsklotz 14, 15 ausüben. Die Krafterzeuger 16, 17 können ferner jeweils eine durch die elektronische Steuereinrichtung 24 ansteuerbare Steuerventileinrichtung aufweisen, über die ein durch die Hauptsteuerventileinrichtung 20 bereitgestellter Hauptbremsdruck individuell für den jeweiligen pneumatischen Zylinder der Krafterzeuger 16, 17 eingestellt werden kann. Somit können insbesondere die Krafterzeuger 16, 17 nach Maßgabe der elektronischen Steuereinrichtung 24 unterschiedliche Bremsdrücke an die Bremsklötze 14, 15 anlegen und somit die Reibbremseinrichtungen asymmetrisch oder separat betätigen oder ansteuern. Der Hauptsteuerventileinrichtung 20 ist ein Hauptbremsdrucksensor 21 zugeordnet, der den durch die Hauptsteuerventileinrichtung 20 bereitgestellten Hauptbremsdruck zu erfassen vermag. Der Drucksensor 21 ist zur Datenübertragung mit der elektronischen Steuereinrichtung 24 verbunden. Ferner ist dem Krafterzeuger 16 ein erster Bremsdrucksensor 31 zugeordnet, und dem zweiten Krafterzeuger 17 ein zweiter Bremsdrucksensor 33. Der erste und der zweite Bremsdrucksensor 31, 33 sind jeweils dazu ausgebildet, dem individuell zum Erzeugen einer Bremskraft durch den zugeordneten Krafterzeuger 16, 17 bereitgestellten Bremsdruck zu erfassen. Die Sensoren 31, 33 sowie der Hauptbremsdrucksensor 21 können als Teil einer Bremsdrucksensoreinrichtung angesehen werden. Die Bremsdrucksensoren 21, 31, 33 sind ebenfalls zur Datenübertragung mit der elektronischen Bremssteuereinrichtung 24 verbunden. Somit kann die elektronische Bremssteuereinrichtung 24 einerseits den eingeleiteten Hauptbremsdruck hinter der Hauptsteuerventileinrichtung 20 erfassen. Andererseits empfängt die Bremssteuereinrichtung 24 jeweils den individuell zur Erzeugung von Bremskraft bei den einzelnen Krafterzeugern 16, 17 wirksamen Bremsdruck. In der Figur 1 kann der Krafterzeuger 16 mit dem Bremsklotz 14 als erste Reibbremseinrichtung angesehen werden. Der Krafterzeuger 17 und der zweite Bremsklotz 15 können als zweite Reibbremseinrichtung angesehen werden. Es versteht sich, dass beide Reibbremseinrichtungen zugehörige Bremsgestänge und Aufhängungen aufweisen können, die nicht gezeigt sind. Die Raddrehzahlsensoren 30, 32 und die den Krafterzeugern 16, 17 zugeordneten Steuerventileinrichtungen können Funktionen einer Gleitschutzeinrichtung übernehmen und/oder als Teile einer solchen angesehen werden.

Die Hauptsteuerventileinrichtung 20 zusammen mit den Reibbremseinrichtungen kann als pneumatische Bremsvorrichtung und insbesondere als Betriebsbremseinrichtung angesehen werden. Die Raddrehzahlsensoren 30, 32, die Bremswirkungssensoren 18, 19 sowie die Drucksensoren 21, 31, 33 können somit jeweils als entsprechenden Komponenten der Betriebsbremseinrichtung zugeordnete Sensoren betrachtet werden. Statt als Klotzbremsen können die Reibbremseinrichtungen auch als Scheibenbremsen ausgebildet sein. Auch in diesem Fall kann jeweils ein Bremswirkungssensor vorgesehen sein, welcher eine bei der Bremsung ausgeübte Bremskraft und/oder ein Bremsmoment zu erfassen und entsprechende Bremsdaten an die elektronische Bremssteuereinrichtung 24 zu übertragen vermag. Die Bremssteuereinrichtung 24 ist dazu ausgebildet, von den Bremswirkungssensoren 18, 19 Bremswirkungsdaten und von den Bremsdrucksensoren 21, 31, 33 Bremsdruckdaten zu empfangen. Ferner ordnet die Bremssteuereinrichtung 24 die Bremsdruckdaten entsprechenden Bremswirkungsdaten zu und überwacht die einander zugeordneten Daten. Die Bremsanlage 10 umfasst ferner eine Magnetschienenbremseinrichtung 40 mit einer Betätigungseinrichtung 42 und einer Reibkomponente 44, die zwischen den Rädern 12, 13 auf dem gleichen Drehgestell angeordnet sind.

Die Betätigungseinrichtung 42 ist dazu vorgesehen, die Reibkomponente 44 bei entsprechender Ansteuerung von einer Ruhestellung in eine Bremsstellung und umgekehrt zu bewegen. In diesem Beispiel vermag es die Betätigungseinrichtung 42, einen pneumatischen Druck oder dessen Wegfallen in eine Bewegung der Reibkomponente 44 umzusetzen. Die Reibkomponente 44 weist einen Elektromagneten auf, welcher dann, wenn er bestromt wird, die Reibkomponente 44 aus der Bremsstellung in reibenden Kontakt mit der Schiene zu bringen vermag. Die Bremssteuereinrichtung 24 ist zur Ansteuerung mit der Magnetschienenbremseinrichtung 40 verbunden und vermag es insbesondere, die Betätigungseinrichtung 42 anzusteuern. Darüber hinaus ist die Bremssteuereinrichtung 24 dazu ausgebildet, die Bestromung des Elektromagneten der Reibkomponente 44 anzusteuern. Es ist vorgesehen, dass die Bremssteuereinrichtung 24 eine Bestromung mit variabler Stromstärke anzusteuern vermag, so dass sich je nach angesteuerter Strömstärke ein unterschiedlich starker Reibkontakt zwischen Schiene und Magnetschienenbremseinrichtung 40 ergibt. Zur Versorgung mit Strom kann die Reibkomponente 44 an das Bordnetz des Schienenfahrzeugs und/oder an eine davon unabhängige Stromquelle angeschlossen oder anschließbar sein. Die Bremsteuereinrichtung 24 ist dazu ausgebildet, die Magnetschienenbremseinrichtung 40 basierend auf Schienenzustandsdaten anzusteuern. Die Schienenzustandsdaten stammen von Sensoren und/oder basieren auf Zustandsdaten, welche den Reibbremseinrichtungen der pneumatischen Bremsvorrichtung der Bremsanlage 10 zugeordnet sind, also der Betriebsbremseinrichtung. Die Zustandsdaten basieren insbesondere auf Daten der Sensoren 18, 19, 21, 30, 31, 32, 33. Es ist vorgesehen, dass die Bremssteuereinrichtung basierend auf von diesen Sensoren bestimmten Daten Schienenzustandsdaten bestimmt, welche insbesondere einen Kraftschluss zwischen den Rädern 12, 13 und der Schiene betreffen. So kann die Bremssteuereinrichtung 24 aus Daten der Raddrehzahlsensoren 30, 32 und/oder aus einem basierend auf diesen Daten bestimmten Radschlupf bestimmen, ob Gleiten oder Blockieren eines der Räder 12, 13 auftritt. Alternativ oder zusätzlich kann jeweils ein für die Räder 12, 13 herrschender Kraftschlussbeiwert bestimmt werden. Basierend auf derartigen Schienenzustandsdaten steuert die Bremssteuereinrichtung 24 die Magnetschienenbremseinrichtung 40 kraftschlussabhängig an. Die Bremssteuereinrichtung 24 ist dazu ausgebildet, ein Reinigungssignal zu empfangen und daraufhin die Magnetschienenbremseinrichtung 40 derart zu betätigen, dass die Reibkomponente in Kontakt mit der Schiene oder einer auf der Schiene liegenden Zwischenschicht gelangt. Dabei wird eine vorbestimmte Reinigungsstromstärke von der Bremssteuereinrichtung 24 eingestellt. Die Reinigungsstromstärke ist geringer als eine Bremsstromstärke, mit welcher die Magnetschienenbremseinrichtung in der Regel für eine Bremsung betätigt oder bestromt wird. Während der Reinigung der Schiene werden vorzugsweise weitere Bremseinrichtungen der Bremsanlage nicht betätigt, so dass sich nur eine geringe Bremsung des Fahrzeugs ergibt, die beispielsweise durch eine erhöhte Antriebsleistung leicht ausgeglichen werden kann. Dazu kann beispielsweise vorgesehen sein, dass ein Antriebsrechner oder ein zentraler Rechner des Schienenfahrzeugs dazu ausgebildet ist, bei Vorliegen eines Reinigungssignals und/oder bei Vorliegen eines die Reinigungsstromstärke angebenden Signals und/oder eines die durch die Magnetschienenbremseinrichtung ausgeübten Bremskraft angebenden Signals eine entsprechende Erhöhung der Antriebsleistung des Schienenfahrzeugs anzusteuern. Das Reinigungssignal und/oder das die Reinigungsstromstärke angebende Signal und/oder das die durch die Magnetschienenbremseinrichtung ausgeübte Bremskraft angebende Signal können beispielsweise durch die Bremssteuereinrichtung 24 bereitgestellt sein. Somit kann eine gewünschte Geschwindigkeit auch bei Einsatz der Magnetschienenbremseinrichtung zu Reinigungszwecken beibehalten werden. Die Bremssteuereinrichtung 24 ist dazu ausgebildet, basierend auf Schienenzustandsdaten wie Kraftschlussbeiwertdaten und/oder Radschlupfdaten die Stromstärke zu variieren. Wird beispielsweise während einer Betätigung der Magnetschienenbremseinrichtung 40 zur Reinigung der Schiene ein gewünschter Kraftschlussbeiwert nicht erreicht, oder ergibt sich eine Abweichung des Radschlupfes von einem gewünschten Radschlupfwert, kann die Bremssteuereinrichtung 24 die Stromstärke variieren, um einen gewünschten Wert von Kraftschlussbeiwert und/oder Radschlupf einzustellen. Die Bremssteuereinrichtung 24 kann allgemein dazu ausgebildet sein, Schienenzustandsdaten, insbesondere den Kraftschlussbeiwert oder einen Radschlupf, bezüglich eines Rades 12, welches in Fahrtrichtung vor der Reibkomponente der Magnetschienenbremseinrichtung 40 liegt, mit entsprechenden Schienenzustandsdaten bezüglich eines Rades 13 zu vergleichen, welches in Fahrtrichtung hinter der Reibkomponente 44 der Magnetschienenbremseinrichtung 40 liegt. Basierend auf einem solchen Vergleich kann beispielsweise überwacht werden, ob der Einsatz der Magnetschienenbremseinrichtung 40 die Kraftschlussbedingungen verändert. Führt ein Einsatz der Magnetschienenbremseinrichtung 40 nicht zu einer gewünschten Änderung, kann die Bremssteuereinrichtung 24 entweder die Reinigungsstromstärke erhöhen oder dann, wenn bereits eine maximale Stromstärke erreicht ist, die Magnetschienenbremseinrichtung deaktivieren, da sich eine Änderung der Kraftschlussbedingungen durch Einsatz der Magnetschienenbremseinrichtung nicht erreichen lässt.

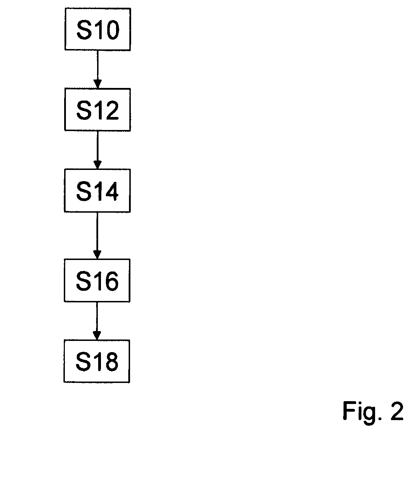

In Figur 2 ist ein Flussdiagramm eines Verfahrens zum Reinigen einer Schiene mit einer Magnetschienenbremseinrichtung gezeigt. In einem Schritt S10 empfängt eine Bremssteuereinrichtung ein Reinigungssignal. Das Reinigungssignal kann beispielsweise durch einen Zugrechner oder einer Zugführer bereitgestellt werden. Die Bremssteuereinrichtung kann eine in Figur 1 beschriebene Bremssteuereinrichtung sein. Die Bremsanlage und die Magnetschienenbremseinrichtung können beispielsweise ebenfalls die in Figur 1 gezeigten Einrichtungen sein. In einem Schritt S12 steuert die Bremssteuereinrichtung die Magnetschienenbremseinrichtung derart an, dass eine Reibkomponente in eine Bremsstellung gebracht wird. Dabei kann vorgesehen sein, dass in einer Bremsstellung bereits ein Kontakt zwischen einer Reibkomponente der Magnetschienenbremseinrichtung und der Schiene oder einer darauf anliegenden Zwischenschicht erfolgt. In einem optionalen Schritt S14 kann vorgesehen sein, dass die Bremssteuereinrichtung einen Elektromagneten der Magnetschienenbremseinrichtung mit einer Reinigungsstromstärke bestromt, um einen verbesserten Kontakt zur Schiene herzustellen. Die Reinigungsstromstärke kann dabei insbesondere geringer sein als eine normale Bremsstromstärke. In einem nachfolgenden Schritt S16 kann die Bremssteuereinrichtung bestimmte Betriebsparameter wie einen Radschlupf und/oder einen Kraftschlussbeiwert für ein oder mehrere Räder bestimmen. Dazu kann vorgesehen sein, dass die Bremssteuereinrichtung entsprechende Daten empfängt. Basierend auf diesen Parametern kann die Bremssteuereinrichtung in Schritt S18 die Stromstärke variieren. Dabei kann beispielsweise die Stromstärke mit welcher die Magnetschienenbremseinrichtung beziehungsweise ein Elektromagnet der Magnetschienenbremseinrichtung bestromt wird, derart eingestellt werden, dass sich ein gewünschter Radschlupf und/oder ein gewünschter Kraftschlussbeiwert einstellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Bremsanlage
- 12: erstes Rad
- 13: zweites Rad
- 14: erster Bremsklotz
- 15: zweiter Bremsklotz
- 16: erster Krafterzeuger
- 17: zweiter Krafterzeuger
- 18: erster Bremskraftsensor
- 19: zweiter Bremskraftsensor
- 20: Hauptsteuerventileinrichtung
- 21: Hauptbremsdrucksensor
- 22: Druckluftvorratseinrichtung
- 24: Bremssteuereinrichtung
- 30: erster Raddrehzahlsensor
- 31: erster Bremsdrucksensor
- 32: zweiter Raddrehzahlsensor
- 33: zweiter Bremsdrucksensor
- 40: Magnetschienenbremseinrichtung
- 42: Betätigungseinrichtung
- 44: Reibkomponente

## Patentansprüche

1. Bremssteuereinrichtung (24) für eine Bremsanlage (10) eines Schienenfahrzeugs, wobei die Bremsanlage (10) mindestens eine Magnetschienenbremseinrichtung (40) aufweist, welche zur Erzeugung einer Bremskraft nach Maßgabe der Bremssteuereinrichtung (24) mit variabler Stromstärke bestrombar ist, **dadurch gekennzeichnet, dass** die Bremssteuereinrichtung (24) dazu ausgebildet ist, die mindestens eine Magnetschienenbremseinrichtung (40) während einer Fahrt zum Reinigen einer Schiene mit einer Reinigungsstromstärke zu betätigen.

2. Bremssteuereinrichtung nach Anspruch 1, wobei die Reinigungsstromstärke geringer ist als eine Bremsstromstärke, mit welcher die Magnetschienenbremseinrichtung (40) während einer Bremsung bestromt wird.

3. Bremssteuereinrichtung nach Anspruch 1 oder 2, wobei die Bremssteuereinrichtung (24) mit einer Raddrehzahlsensoreinrichtung (30, 32) verbunden oder verbindbar ist.

4. Bremssteuereinrichtung nach einem der vorhergehenden Ansprüche, wobei die Bremssteuereinrichtung (24) dazu ausgebildet ist, die Reinigungsstromstärke in Abhängigkeit von mindestens einem Radschlupf zu variieren.

5. Bremssteuereinrichtung nach einem der vorhergehenden Ansprüche, wobei die Bremssteuereinrichtung (24) mit einer Bremswirkungssensoreinrichtung (16, 18) verbunden oder verbindbar ist.

6. Bremssteuereinrichtung nach einem der vorhergehenden Ansprüche, wobei die Bremssteuereinrichtung (24) dazu ausgebildet ist, die Reinigungsstromstärke in Abhängigkeit von mindestens einem Kraftschlussbeiwert zu variieren.

7. Bremssteuereinrichtung nach einem der vorhergehenden Ansprüche, wobei die Bremssteuereinrichtung (24) dazu ausgebildet ist, die Reinigungsstromstärke in Abhängigkeit von einer zeitlichen Änderung eines Radschlupfes und/oder eines Kraftschlussbeiwertes zu variieren.

8. Bremsanlage (10) mit einer Magnetschienenbremseinrichtung (40) und einer Bremssteuereinrichtung (24) nach einem der Ansprüche 1 bis 7.

9. Schienenfahrzeug mit einer Bremsanlage (10) nach Anspruch 8 und/oder einer Bremssteuereinrichtung (24) nach einem der Ansprüche 1 bis 7.

10. Verfahren zum Reinigen einer Schiene mit einer Magnetschienenbremseinrichtung (40) eines Schienenfahrzeugs, wobei die Magnetschienenbremseinrichtung (40) zur Erzeugung einer Bremskraft nach Maßgabe einer Bremssteuereinrichtung (24) mit variabler Stromstärke bestrombar ist, **dadurch gekennzeichnet, dass** bei dem Verfahren die Magnetschienenbremseinrichtung (40) durch die Bremssteuereinrichtung (24) mit einer Reinigungsstromstärke betätigt wird.

## Claims

1. Brake control device (24) for a brake system (10) of a rail vehicle, wherein the brake system (10) has at least one magnetic track brake device (40) to which current can be applied at a variable current intensity in order to generate a braking force according to instructions from the brake control device (24), **characterised in that** the brake control device (24) is designed to operate the at least one magnetic track brake device (40) at a cleaning current intensity in order to clean a rail during travel.

2. Brake control device according to claim 1, wherein the cleaning current intensity is lower than a braking current intensity at which current is applied to the magnetic track brake device (40) during a braking operation.

3. Brake control device according to claim 1 or 2, wherein the brake control device (24) is connected or can be connected to a wheel speed sensor device (30, 32).

4. Brake control device according to any of the preceding claims, wherein the brake control device (24) is designed to vary the cleaning current intensity as a function of at least one wheel slip.

5. Brake control device according to any of the preceding claims, wherein the brake control device (24) is connected or can be connected to a braking action sensor device (16, 18).

6. Brake control device according to any of the preceding claims, wherein the brake control device (24) is designed to vary the cleaning current intensity as a function of at least one adhesion coefficient.

7. Brake control device according to any of the preceding claims, wherein the brake control device (24) is designed to vary the cleaning current intensity as a function of a change in a wheel slip and/or in an adhesion coefficient with respect to time.

8. Brake system (10) having a magnetic track brake device (40) and a brake control device (24) according to any of claims 1 to 7.

9. Rail vehicle having a brake system (10) according to claim 8 and/or having a brake control device (24) according to any of claims 1 to 7.

10. Method for cleaning a rail using a magnetic track brake device (40) of a rail vehicle, wherein current can be applied to the magnetic track brake device (40) at a variable current intensity in order to generate a braking force according to instructions from a brake control device (24), **characterised in that**, in the method, the magnetic track brake device (40) is operated at a cleaning current intensity by the brake control device (24).

## Revendications

1. Dispositif (24) de commande de frein pour un système (10) de freinage d'un véhicule ferroviaire, le système (10) de freinage ayant au moins un dispositif (40) de frein électromagnétique sur rail qui, pour produire une force de freinage peut, selon ce qu'indique le dispositif (24) de commande de frein, être alimenté en une intensité de courant variable, **caractérisé en ce que** le dispositif (24) de commande de frein est constitué pour actionner au moins le dispositif (40) de frein électromagnétique sur rail pendant une marche pour nettoyer un rail par une intensité de courant de nettoyage.

2. Dispositif (24) de commande de frein sur la revendication 1, dans lequel l'intensité du courant de nettoyage est plus petite qu'une intensité de courant de frein, par laquelle le dispositif (40) de frein électromagnétique sur rail est alimenté pendant un freinage.

3. Dispositif (24) de commande de frein sur les revendications 1 ou 2, dans lequel le dispositif (24) de commande de frein est relié à un dispositif (30, 32) capteur de vitesse de rotation de roue ou peut l'être.

4. Dispositif (24) de commande de frein sur l'une des revendications précédentes, dans lequel le dispositif (24) de commande de frein est constitué pour faire varier l'intensité du courant de nettoyage, en fonction d'au moins un glissement de roue.

5. Dispositif (24) de commande de frein sur l'une des revendications précédentes, dans lequel le dispositif (24) de commande de frein est relié à un dispositif (16, 18) capteur d'effet de freinage ou peut l'être.

6. Dispositif (24) de commande de frein sur l'une des revendications précédentes, dans lequel le dispositif (24) de commande de frein est constitué pour faire varier l'intensité du courant de nettoyage en fonction d'au moins un coefficient de force d'adhérence.

7. Dispositif (24) de commande de frein sur l'une des revendications précédentes, dans lequel le dispositif (24) de commande de frein est constitué pour faire varier l'intensité du courant de nettoyage en fonction d'une variation dans le temps d'un glissement de roue et/ou d'un coefficient d'adhérence.

8. Système (10) de freinage ayant un dispositif (40) de frein électromagnétique sur rail et un dispositif (24) de commande de frein suivant l'une des revendications 1 à 7.

9. Véhicule ferroviaire ayant un système (10) de freinage suivant la revendication 8 et/ou un dispositif (24) de commande de frein suivant l'une des revendications 1 à 7.

10. Procédé pour nettoyer un rail par un dispositif (40) de frein électromagnétique sur rail d'un véhicule ferroviaire, le dispositif (40) de frein électromagnétique sur rail pouvant, pour la production d'une force de freinage, être alimenté en une intensité de courant variable suivant les indications d'un dispositif (24) de commande de frein, **caractérisé en ce que**, dans le procédé, on actionne par une intensité de courant de nettoyage, le dispositif (40) de frein électromagnétique sur rail par le dispositif (24) de commande de frein.
